# EUROPEAN PATENT SPECIFICATION

(11) **EP 4 142 517 B1**
(45) Date of publication and mention of the grant of the patent: **29.05.2024**
(21) Application number: 21721133.3
(22) Date of filing: 29.04.2021
(51) Int. Cl.: A23L 23/10, A23L 27/30, A23L 27/40, A23L 29/212

(54) **COMPOSITION FOR MAKING BOUILLONS**
ZUSAMMENSETZUNG ZUR HERSTELLUNG VON BOUILLONS
COMPOSITION POUR LA FABRICATION DE BOUILLONS

(30) Priority: 30.04.2020 EP 20172516
(43) Date of publication of application: 08.03.2023
(73) Proprietor: Unilever IP Holdings B.V., 3013 AL Rotterdam (NL)
(72) Inventor: CAMILO DE OLIVEIRA, Marcelo, 6708 WH Wageningen (NL); CEBOTARESCU, Livia, 6708 WH Wageningen (NL); CORREIA GARCIA, Janaina, 6708 WH Wageningen (NL); DI SEVO NESSO, Angela, 6708 WH Wageningen (NL); LEFEVRE GRAGNANI, Marco, Antonio, 6708 WH Wageningen (NL); MAINX, Margaretha, Mareike, 6708 WH Wageningen (NL); RAMOS DOS SANTOS, Felipe, Augusto, 6708 WH Wageningen (NL); TAMMES, Harmannus, 6708 WH Wageningen (NL)
(74) Representative: van den Brom, Coenraad Richard
(86) International application number: PCT/EP2021/061302
(87) International publication number: WO 2021/219804

(56) References cited:
- WO-A1-2007/104326
- WO-A1-2019/002088
- WO-A1-2019/192959
- RU-C2- 2 409 293
- US-A- 5 232 732

## Description

### FIELD OF THE INVENTION

The present invention relates to a composition that can be used for making salt-free bouillons. The invention also relates to a method for preparation of such compositions.

### BACKGROUND TO THE INVENTION

Bouillon powders and cubes are well known compositions for making food products like bouillons, soups and gravies. Essential ingredients of such bouillon powders and cubes are generally kitchen salt crystals and monosodium glutamate crystals. Consumers normally like to eat a salty, savoury bouillon or soup, therefore these ingredients serve to improve the taste of the bouillons. Additionally, these ingredients may be important to provide the correct structure to the bouillon powder or cube, and enable the efficient production of the composition.

WO 2017/186514 A1 relates to a process of preparing a shaped savoury concentrate having a water activity of less than 0.8 and a total fat content of 10-35 wt. %.

WO 03/000077 A1 relates to a soft bouillon tablet and to a process for the production of a soft bouillon tablet.

WO 03/003858 A1 and WO 2004/049831 A1 relate to a hard bouillon tablet and to a process for the production of a hard bouillon tablet.

WO 2017/067901 A1 relates to composition comprising an oil phase and a fibrous preparation of delaminated cell wall material.

WO 2012/021069 A1, WO 2012/021070 A1, WO 2012/021071 A1, and WO 2012/021073 A1 relate to savoury concentrates comprising inorganic salt, fat and polysaccharide gums, or carboxymethyl cellulose, or heteropolysaccharide gum, or gellan gum.

US 5,232,732 A relates to a dry soup mix adapted to be combined with water and residual food items in field ration tray packs to provide a soup, said soup mix having a salt content of not greater than 6% by weight.

WO 2007/104326 A1 relates to a container comprising one or more of concentrate articles for preparing a bouillon, soup, sauce, roux, gravy or for use as a seasoning, the concentrate articles comprising a core of compressed ingredients and a coating layer, the core comprising (by weight):
- 2-70% of salt and/or 1-70% starch or flour, and one or more of:
- 3-60% fat
- 10-95% of a taste and/or flavour imparting substance including herbs, spices, vegetable powders or particulates, flavourants, taste-enhancers, sugar.

Nevertheless, there is a desire among consumers to reduce their salt intake, and in particular sodium intake, because of health concerns that consumers may have associated with excessive consumption of salt.

Bouillon cubes without salt are available on the market, e.g. Bouillon cube Légumes Sans Sel from Jardin Bio (France). This contains as ingredients, among others, shea butter, dried vegetables and herbs and vegetable juice, corn starch, glucose syrup, sugar, spices, traces of olive oil and sunflower oil.

### SUMMARY OF THE INVENTION

The objective of the current invention is to provide a composition that can be used for making bouillons, soups and gravies, that is free from added kitchen salt, and that can be prepared in regular machines for making bouillon cubes (in case the compositions is in the form of a cube).

We have now developed a composition, preferably in the form of a solid or pasty cube, for preparing a bouillon, to which no kitchen salt has been added, and which contains a specific ratio of native starch and maltodextrin and/or glucose syrup. This ratio between these ingredients leads to a good quality composition that can be prepared in the same way as regular compositions for making bouillons that do contain kitchen salt.

Accordingly in a first aspect the invention provides a composition for making bouillons, comprising:
a) 0% to 10% by weight of vegetable oil;
b) 0% to 25% by weight of mono- and disaccharides;
c) 0.05% to 12% by weight of beef flavour, chicken flavour, meat flavour, and/or vegetable flavour;
d) 10% to 50% by weight of native ungelatinised starch;
e) 10% to 50% by weight of dry glucose syrup, maltodextrin and combinations thereof;
f) 10% to 35% by weight of fat;
and wherein the weight ratio between the compounds in sub d) and sub e) ranges from 0.8 to 1.3; and wherein the sodium content is maximally 0.5% by weight.

In a second aspect, the invention provides a method for preparation of a composition according to the first aspect of the invention, comprising the steps:
a) mixing mono- and disaccharides, optionally vegetable oil, optionally at least a part of beef flavour, chicken flavour, meat flavour, and/or vegetable flavour, and optionally at least a part of herbs, spices, vegetables, and mixtures thereof;
b) adding native ungelatinised starch and dry glucose syrup, maltodextrin and combinations thereof to the mixture from step a), optionally at least a part of beef flavour, chicken flavour, meat flavour, and/or vegetable flavour, and optionally at least a part of herbs, spices, vegetables, and mixtures thereof; and mixing this combination of compounds;
c) adding fat, optionally at least a part of beef flavour, chicken flavour, meat flavour, and/or vegetable flavour, and optionally at least a part of herbs, spices, vegetables, and mixtures thereof, and optionally at least a part of herbs, spices, vegetables, and mixtures to the mixture from step b), and mixing this combination of compounds;
d) dosing the mixture from step c) into a packaging material.

### DETAILED DESCRIPTION OF THE INVENTION

All percentages herein are provided as weight percent, unless defined otherwise.

The composition of the invention can be used to prepare a bouillon, or a soup, or a gravy, or any other food product that can be prepared with the composition of the invention. Preferably, the composition of the invention provides a clear bouillon after dilution with hot water, preferably after 20 times dilution with hot water. Preferably the composition of the invention provides a clear bouillon after 50 times dilution with hot water. The bouillon can be beef-flavoured bouillon, or a chicken-flavoured bouillon, or a meat-flavoured bouillon, or a vegetable-flavoured bouillon.

The composition contains 0% to 10% by weight of vegetable oil. With vegetable oil is meant an edible oil which is liquid at room temperature (between 20 and 25°C). Preferably such vegetable oil has a solid fat content at 20°C (N20) of smaller than 0.5%, preferably the N20 is 0. Preferably the vegetable oil comprises sunflower oil, rapeseed oil, soybean oil, linseed oil, olive oil, or combinations thereof. Alternative vegetable oils which are regularly used in food products, are suitable as well. Preferably the content of vegetable oil ranges from 1% to 10% by weight, preferably 2% to 6% by weight, more preferred from 3% to 5% by weight.

The composition contains 0% to 25% by weight of mono- and disaccharides. Preferably the content of mono- and disaccharides ranges from 1% to 20% by weight, preferably from 2% to 15% by weight. A preferred disaccharide to be added is sucrose, regular table sugar. In case sucrose is used, the sucrose crystals preferably have a diameter ranging from 0.1 and 0.75 millimeter.

The composition contains from 0.05% to 12% by weight of beef flavour, chicken flavour, meat flavour, and/or vegetable flavour, preferably from 0.05% to 10% by weight, preferably from 0.05% to 8% by weight, or even 0.05% to 6% by weight. Depending on the type of bouillon that is desired, the correct flavour can be added to the composition. The term 'flavour' should be understood to encompass a wide range of compositions or compounds that can be used as flavour. It may for instance various flavour blocks, like a beef flavour block, and an umami flavour block, extracts from meat, vegetables, etc.

Additionally, the composition preferably further comprises 0.5% to 30% by weight of herbs, spices, vegetables, and mixtures thereof. Any herbs, spices, and vegetables commonly found in bouillons and soups can be used, e.g. parsley, pepper, etc.

Preferably the herbs, spices, and vegetables comprise dried herbs, spices, and vegetables, like pieces of dried carrot, dried onion, dried garlic, dried leek. Preferably the composition additionally comprises nucleotides, glutamic acid, or combinations thereof. In the context of this invention, glutamic acid comprises its salt, glutamate. Nevertheless, preferably the content of monosodium glutamate is maximally 1%, preferably maximally 0.5%, more preferably monosodium glutamate is absent. Most preferably monosodium glutamate is absent from the composition, meaning that it is not added as a separate ingredient to the composition. In spite thereof, some naturally present monosodium glutamate may be present in the composition, if such monosodium glutamate is present in one of the compounds of the composition. For instance, yeast extract may be used as an ingredient in the composition, and this may contain nucleotides and monosodium glutamate.

The composition comprises 10% to 50% by weight of native ungelatinised starch. Native means that the starch is extracted from its source material, and is subsequently purified to be used as food ingredient. Preferably the native ungelatinised starch originates from corn, potato, wheat, rice, or tapioca. Most preferred the starch comprises corn starch or tapioca starch or potato starch. Preferably the content of native ungelatinised starch ranges from 15% to 40% by weight, preferably from 20% to 30% by weight.

The composition comprises 10% to 50% by weight of dry glucose syrup, maltodextrin and combinations thereof. The dry glucose syrup preferably originates from corn or maize or wheat. The glucose syrup is dried, in order to prevent that the composition of the invention contains too much water. In spite that the glucose syrup has been dried, it is still mentioned glucose 'syrup' in the art. The maltodextrin preferably also originates from corn or maize or wheat.

Preferably the content of dry glucose syrup, maltodextrin and combinations thereof ranges from 15% to 40% by weight, preferably from 18% to 30% by weight, more preferred from 20% to 30% by weight, and most preferred from 20% to 28% by weight. Preferably, the glucose syrup has a DE value ranging from 26 to 30. Preferably, the maltodextrin has a DE value ranging from 3 to 20, preferably from 8 to 18, and most preferred from 9 to 17. The DE value is the dextrose equivalent value which is the measure for the length of glucose chains that make up maltodextrin and dried glucose syrup.

The dried glucose syrup is in the form of a powdered or granular composition, containing granules of glucose syrup. Preferably the particle size distribution of the dry glucose syrup is such that maximally 35% of the weight of particles has a diameter smaller than 63 micrometer, preferably maximally 40% of the weight of particles has a diameter smaller than 63 micrometer. Preferably, maximally 10% of the weight of the particles has a diameter of more than 400 micrometer, and preferably maximally 1% of the weight of the particles has a diameter of more than 500 micrometer. Preferably, at least 50% of the weight of the particles has a diameter of less than 100 micrometer. In the context of the present invention, 'diameter' means the largest dimension of a 2D projection of a particle on a flat surface.

Without being bound by theory, the inventors believe that dry glucose syrup and maltodextrin have a binding effect to the composition, and due to a rough surface structure, ensures that particles in the composition of the invention are bridged and can be processed to prepare the composition of the invention. These compounds serve to keep the ingredients together. This is believed to be due to the glassy state in which dry glucose syrup and maltodextrin are. They are not present as crystals, but in an amorphous, solid state.

The weight ratio between the native ungelatinised starch and glucose syrup, maltodextrin and combinations thereof ranges from 0.8 to 1.3. Preferably, the weight ratio between the native ungelatinised starch and glucose syrup, maltodextrin and combinations thereof ranges from 0.9 to 1.2, preferably from 1.0 to 1.2, more preferred from 1.0 to 1.1. This ratio and preferred ratio provides a composition that can be produced in an apparatus that is commonly used to make similar compositions that contain normal amounts of kitchen salt, e.g. more than 5% or 10% kitchen salt.

Preferably, the total content of glucose syrup, maltodextrin and combinations thereof and mono- and disaccharides is at least 22% by weight, more preferred at least 25%, more preferred at least 28%, more preferred at least 33%, and preferably at most 40% by weight.

Preferably the weight ratio between [glucose syrup, maltodextrin and combinations thereof] and [mono- and disaccharides] preferably is at least 1, preferably at least 1.3, preferably at least 1.8, preferably at least 2.3, preferably at least 2.5. Preferably that same ratio is maximally 3, preferably maximally 2.8.

The composition comprises 10% to 35% by weight of fat. With fat is meant an edible fat which is solid at room temperature (between 20 and 25°C). Preferably such fat has a solid fat content at 20°C (N20) of at least 15%, more preferred at least 20%, more preferred at least 30%. Preferably the fat comprises palm oil, palm kernel, fractionated palm oil, palm oil stearine, fully hydrogenated palm oil, shea oil, shea butter, shea oil stearin, and combinations thereof. Alternative edible fats which are regularly used in food products, are suitable as well, as long as the N20 requirement has been met. Suitably fats like coconut fat, cacao butter, hardened fats, tallow, chicken fat, or cow's milk fat may be used. Preferably the content of fat ranges from 20% to 30% by weight, preferably from 25% to 30% by weight.

Particularly preferred compositions of the invention comprise:
e) 10% to 50% by weight of maltodextrin; and
f) 10% to 35% by weight of palm oil or palm oil stearin or fully hydrogenated palm oil, or combinations thereof.

Preferably the content of maltodextrin ranges from 15% to 40% by weight, preferably from 20% to 30% by weight. More preferred, in combination with palm oil or palm oil stearin or fully hydrogenated palm oil, or combinations thereof, the content of maltodextrin ranges from 25% to 30% by weight, and most preferred from 25% to 28% by weight. Preferably, the maltodextrin has a DE value ranging from 3 to 20, preferably from 8 to 18, and most preferred from 9 to 17. Preferably the content of palm oil or palm oil stearin, or combinations thereof ranges from 20% to 30% by weight, preferably from 25% to 30% by weight. In this case preferably the content of vegetable oil ranges from 1 % to 10% by weight, preferably 1% to 6% by weight, more preferred from 2% to 5% by weight.

Alternative particularly preferred compositions of the invention comprise:
e) 10% to 50% by weight of dry glucose syrup; and
f) 10% to 35% by weight of shea butter or shea butter stearin, or combinations thereof.

Preferably the content of dry glucose syrup ranges from 15% to 40% by weight, more preferably from 18% to 30% by weight (in particular in combination with butter or shea butter stearin, or combinations thereof). More preferred, the content of dry glucose syrup ranges from 19% to 28% by weight. Preferably, the glucose syrup has a DE value ranging from 26 to 30. Preferably the content of shea butter or shea butter stearin, or combinations thereof ranges from 20% to 30% by weight, preferably from 25% to 30% by weight. In this case preferably the composition does not comprise vegetable oil, or maximally 2% by weight.

The free water content in the composition of the invention is preferably as low as possible. Preferably the free water content is maximally 2% by weight, preferably maximally 1%, more preferably free water is absent. In the context of the present invention, free water means unbound water, which may be added as such during the preparation of the composition. Nevertheless, the compounds which are used to prepare the composition may contain a certain amount of water, which is bound within the particles of the particulate composition. This is not considered to be free water. Such bound water being naturally present in the compounds, means that moisture may be present in the composition of the invention. Such moisture is not considered to be free water, in the context of the present invention. Notably the native starch may contain moisture. The water activity of the composition preferably ranges from 0.2 to 0.4. The low free water level leads to a composition that can be prepared in regular machinery used for preparation of bouillon cubes.

The sodium content of the composition is maximally 0.5% by weight. During preparation of the composition, no kitchen salt (NaCl) is added to the composition. Nevertheless, sodium may be present in the composition, as it may be present as a salt in any of the compounds which are added to the composition. Nevertheless, the content of sodium preferably is as low as possible. Therefore, preferably the sodium content is maximally 0.4% by weight, preferably maximally 0.4% by weight, preferably maximally 0.3% by weight, preferably maximally 0.2% by weight, preferably maximally 0.1% by weight, preferably maximally 0.05% by weight, and most preferably maximally 0.025% by weight.

The resulting composition may have the appearance of a powder or granular composition or a paste. Alternatively, and more preferred the composition is present in a compressed form, as a bouillon cube. Therefore, preferably the composition is in the form of a bouillon cube. Such bouillon cube suitably has a weight of 8 to 10 grams, which would be suitable to prepare 500 milliliter of bouillon by dispersing this in hot water.

The savoury concentrate may suitably contain additional ingredients, such as taste enhancers (yeast extract, yeast autolysate, hydrolysed vegetable protein), gelatine, binders, emulsifiers (e.g. lecithin and/or monoglycerides), flavouring, colouring (e.g. caramel, turmeric), minerals, vitamins, meat or vegetable extracts, and grinded dried meat.

In a second aspect, the invention provides a method for preparation of a composition according to the first aspect of the invention, comprising the steps:
a) mixing mono- and disaccharides, optionally vegetable oil, optionally at least a part of beef flavour, chicken flavour, meat flavour, and/or vegetable flavour, and optionally at least a part of herbs, spices, vegetables, and mixtures thereof;
b) adding native ungelatinised starch and dry glucose syrup, maltodextrin and combinations thereof to the mixture from step a), optionally at least a part of beef flavour, chicken flavour, meat flavour, and/or vegetable flavour, and optionally at least a part of herbs, spices, vegetables, and mixtures thereof; and mixing this combination of compounds;
c) adding fat, optionally at least a part of beef flavour, chicken flavour, meat flavour, and/or vegetable flavour, and optionally at least a part of herbs, spices, vegetables, and mixtures thereof, and optionally at least a part of herbs, spices, vegetables, and mixtures to the mixture from step b), and mixing this combination of compounds;
d) dosing the mixture from step c) into a packaging material.

As indicated before, preferably the free water content is lower than 2%, or more preferred the composition contains no free water. Therefore, preferably no water is added in any of steps a) to c) to prepare the composition, in addition to the required compounds which are added to the composition.

As also indicated before, the sodium content of the composition is low. Therefore, preferably in addition to the compounds in steps a) to c) no sodium chloride is added to prepare the composition, in addition to the required compounds which are added to the composition.

In order to keep the sodium content of the composition low, preferably no mono-sodium glutamate is added in any of steps a) to c) to prepare the composition, in addition to the required compounds which are added to the composition.

The method for preparation of the composition uses equipment normally suitable to make this kind of food composition, e.g. Ploughshare or Amixon or Z-blade type mixers. In step a) the mixing is done in a vessel containing a regular mixer for powders. Similarly, in step b) the mixing operation can be done in the same vessel using the same mixer as in step a). In step c) the fat is added to the composition. The fat may be added at room temperature, in the form of sprinkles. Alternatively, the fat may have been heated in order to liquify the fat. The temperature to heat such fat is commonly known for regular fats. In case the fat is liquid, it can be used to bind the dry powders, and create a more pasty mix, which subsequently solidifies. Preferably the fat is not added completely liquid, but cooled, in order to pre-crystallise the fat. The solid fat content of such mixture has been increased compared to the fully liquid fat. Nevertheless, the fat in such case is still in liquid form (although a bit more viscous) and can be used to create a paste with the powdered mixture. Such cooling can be done in a controlled manner in a regular votator. The advantage of using such partly pre-crystallised fat, is that a structure of solid fat crystals is created which keeps other ingredients together, and that can also retain liquid vegetable oil.

Preferably in case the fat comprises palm oil, or palm oil stearin, or fully hydrogenated palm oil, or mixtures thereof, it is heated in step c) before being mixed with the other compounds.

Preferably in case the fat comprises shea butter or shea butter stearin, or combinations thereof, it is added to step c) as solid sprinkles or as long and thin strands of fat (like spaghetti), and thereafter mixed with the other ingredients. Alternatively, the shea butter or shea butter stearin can be added in a partly crystallised liquid form (typically obtained from a votator), or in liquid form.

In step d) the composition is dosed into a packaging material, in order to be able to distribute the composition. In case the composition is present as a bouillon cube, then the mixture from step c) is dosed on a foldable wrapper, like aluminium or laminated paper. Such packaging material containing the mixture is subsequently formed into the right shape by folding the packaging material and therewith also compressing the composition into a cube. The cube in such case is in a pasty or solid form. The packaging materials suitably contains paper or aluminium which may be coated.

Alternatively, other processing options may be utilised, e.g. a process wherein the order of the addition of ingredients is different than stated here. An alternative method is the following:
a) mixing mono- and disaccharides, optionally vegetable oil, optionally at least a part of beef flavour, chicken flavour, meat flavour, and/or vegetable flavour, optionally at least a part of herbs, spices, vegetables, and mixtures thereof, native ungelatinised starch and dry glucose syrup, maltodextrin and combinations thereof, and mixing this combination of compounds;
b) adding fat, optionally at least a part of beef flavour, chicken flavour, meat flavour, and/or vegetable flavour, and optionally at least a part of herbs, spices, vegetables, and mixtures to the mixture from step a), and mixing this combination of compounds;
c) dosing the mixture from step b) into a packaging material.

Any preferred feature applicable to the first or second aspect of the invention, is considered to be applicable to the other aspect of the invention as well, *mutatis mutandis.* All values and ranges are understood to be preceded by the word 'about'.

### EXAMPLES

The following compositions were prepared to create bouillon cubes, following the process of the invention.

### Example 1 - Compositions containing palm oil and maltodextrin

**Table 1 - Compositions A to E**

| **Ingredient** | **A** [weight%] | **B** [weight%] | **C** [weight%] | **D** [weight%] | **E** [weight%] |
|---|---|---|---|---|---|
| Tapioca starch native | 27.6 | 27.6 | 27.6 | 28.5 | 28.5 |
| Palm oil | 28 | 27 | 25 | 26 | 26 |
| White sucrose | 10 | 10 | 10 | 10 | 10 |
| Maltodextrin DE 10 | 26.6 | 26.8 | 29.7 | 26.8 | 26.2 |
| Soybean oil | 5 | 4 | 3 | 4 | 4.6 |
| Herbs, spices (parsley, pepper, turmeric) | 0.9 | 0.9 | 1.1 | 1.1 | 1.1 |
| Garlic, onion, leek dried, carrot | 1.3 | 1.3 | 2.6 | 2.6 | 2.6 |
| Flavouring | 0.6 | 0.6 | 1.0 | 1.0 | 1.0 |
| Water | | 1.8 | | | |

Maltodextrin was obtained from Ingredion (Westchester, IL, USA). In the present case, the palm oil is a blend of palm oil stearine and fully hydrogenated palm oil. The compositions were prepared according to the method of the invention. Sucrose, soybean oil, and colourants were added to a vessel with a mixer and mixed for 1 minute at 30 rpm. Subsequently tapioca starch, maltodextrin and other dry ingredients were added, and the mixture was mixed for 30 seconds at 60 rpm. Finally palm oil was liquified by heating, subsequently partly pre-crystallised in a votator, and added to the mixture. Also dried herbs and spices and vegetables and flavours were added. Finally, the mixture was mixed for 3 minutes at 60 rpm. The resulting paste was extruded on paper packaging material, and subsequently mechanically wrapped into single bouillon cubes. The cubes were pasty, and had a weight of about 8 gram.

Composition B could not be made successfully. Due to the water which was added to the recipe, the composition became too sticky, and could not be compressed into single bouillon cubes. Composition C could be prepared, but its structure was less optimal than composition A, D, and E.

Another composition that was prepared (using the same method described above) was the following:

**Table 2 - Composition F**

| **Ingredient** | **F** [weight%] |
|---|---|
| Tapioca starch native | 27.1 |
| Palm oil stearine | 28 |
| White sucrose (0.1-0.75mm) | 10 |
| Maltodextrin DE 9-17 | 26 |
| Soybean oil | 5 |
| Herbs, spices (parsley, pepper, turmeric, caramel) | 1.0 |
| Garlic, onion, leek dried, carrot | 2.1 |
| Flavouring | 0.8 |

### Example 2 - Compositions containing shea butter and glucose syrup

Alternative compositions to those in example 1 were prepared:

**Table 3 - Compositions G-N (vegetable, chicken)**

| | **G** | **H** | **I** | **J** |
|---|---|---|---|---|
| **Ingredient** | chicken [weight%] | vegetable [weight%] | vegetable [weight%] | vegetable [weight%] |
| Potato starch native | 20.0 | 21.6 | 20.0 | 34.0 |
| Shea butter | 26.0 | 24.3 | 25.0 | 26.0 |
| Rapeseed oil | | | | |
| Sucrose, 0.1-0.75mm | 8.0 | 7.8 | 8.0 | 17.0 |
| Dry glucose syrup DE 28 | 19.0 | 21.3 | 15.4 | 1.6 |
| Yeast extract | 1.0 | 3.0 | 3.0 | |
| Chicken meat powder | 2.5 | | | |
| Chicken fat | 3.0 | | | |
| Vegetables powders¹ | 8.0 | 19.4 | 22.0 | 11.8 |
| Herbs, spices² | 2.7 | 1.1 | 2.1 | 2.4 |
| Vegetable pieces, leaves³ | 2.7 | 1.5 | 1.5 | 2.3 |
| Flavouring | 7.1 | 0.0 | 3.0 | 5.0 |

| | **K** | **L** | **M** | **N** |
|---|---|---|---|---|
| **Ingredient** | vegetable [weight%] | vegetable [weight%] | chicken [weight%] | vegetable [weight%] |
| Potato starch native | 34.0 | 24.0 | 19.0 | 24.0 |
| Shea butter | 28.0 | 24.0 | 26.0 | 20.0 |
| Rapeseed oil | | | 3.0 | |
| Sucrose, 0.1-0.75mm | 15.0 | 15.0 | 8.0 | 15.0 |
| Dry glucose syrup DE 28 | 1.6 | 15.6 | 21.4 | 19.6 |
| Yeast extract | | | 1.0 | |
| Chicken meat powder | | | | |
| Chicken fat | | | | |
| Vegetables powders¹ | 11.8 | 11.8 | 9.9 | 11.8 |
| Herbs, spices² | 2.4 | 2.4 | 2.5 | 2.4 |
| Vegetable pieces, leaves³ | 2.3 | 2.3 | 2.7 | 2.3 |
| Flavouring | 5.0 | 5.0 | 6.5 | 5.0 |

| | | | | |
|---|---|---|---|---|
| ¹ Vegetables powders: includes tomato, garlic, mushroom, onion ² Herbs, spices: includes turmeric, pepper, lovage, nutmeg ³ Vegetable pieces, leaves: includes carrot, bell pepper, parsley | | | | |

These compositions were prepared according to the method of the invention. Sucrose, chicken meat powder and chicken fat (if applicable), yeast extract, were added to a vessel with a mixer and mixed for 1 minute at 30 rpm. Subsequently tapioca starch, dry glucose syrup and other dry ingredients (flavour, vegetable powders, etc.) were added, and the mixture was mixed for 30 seconds at 60 rpm. Shea butter was added as long strands of fat (like spaghetti, samples G, I, K), or as little cubes (samples H, J, L, M), or in liquid form (sample N). Vegetable pieces and leaves were added as last ingredients. This mixture was mixed for 3 minutes at 60 rpm. The resulting mixtures (a paste) were extruded on wrappers, and subsequently mechanically wrapped into single bouillon cubes. The cubes were pasty, and had a weight of about 8 gram.

The result was that samples J and K (with only a small amount of glucose syrup), could not be prepared, as a consistent paste could not be prepared and transported to the packaging machine for wrapping. Sucrose cannot replace glucose syrup.

## Claims

1. A composition for making bouillons, comprising:
a) 0% to 10% by weight of vegetable oil;
b) 0% to 25% by weight of mono- and disaccharides;
c) 0.05% to 12% by weight of beef flavour, chicken flavour, meat flavour, and/or vegetable flavour;
d) 10% to 50% by weight of native ungelatinised starch;
e) 10% to 50% by weight of dry glucose syrup, maltodextrin and combinations thereof;
f) 10% to 35% by weight of fat;
and wherein the weight ratio between the compounds in sub d) and sub e) ranges from 0.8 to 1.3; and wherein the sodium content is maximally 0.5% by weight.

2. A composition according to claim 1, that provides a clear bouillon after dilution with hot water, preferably after 20 times dilution with hot water, preferably a chicken, beef or vegetable clear bouillon.

3. A composition according to claim 1 or 2, further comprising 0.5% to 30% by weight of herbs, spices, vegetables, and mixtures thereof.

4. A composition according to any of claims 1 to 3, wherein the free water content is maximally 2% by weight, preferably maximally 1%, more preferably wherein free water is absent.

5. A composition according to any of claims 1 to 4, wherein the content of dry glucose syrup, maltodextrin and combinations thereof ranges from 15% to 40% by weight, preferably from 18% to 30% by weight.

6. A composition according to any of claims 1 to 5, wherein the sodium content is maximally 0.4% by weight, preferably maximally 0.4% by weight, preferably maximally 0.3% by weight, preferably maximally 0.2% by weight, preferably maximally 0.1% by weight, preferably maximally 0.05% by weight, and most preferably maximally 0.025% by weight.

7. A composition according to any of claims 1 to 6, wherein the content of monosodium glutamate is maximally 1%, preferably maximally 0.5%, more preferably wherein monosodium glutamate is absent.

8. A composition according to any of claims 1 to 7, wherein the glucose syrup has a DE value ranging from 26 to 30 and/or wherein the maltodextrin has a DE value ranging from 3 to 20, preferably from 8 to 18.

9. A composition according to any of claims 1 to 8, comprising:
e) 10% to 50% by weight of maltodextrin;
f) 10% to 35% by weight of palm oil or palm oil stearin or fully hydrogenated palm oil, or combinations thereof.

10. A composition according to any of claims 1 to 8, comprising:
e) 10% to 50% by weight of dry glucose syrup;
f) 10% to 35% by weight of shea butter or shea butter stearin, or combinations thereof.

11. A composition according to any of claims 1 to 10, wherein the weight ratio between the compounds in sub d) and sub e) ranges from 0.9 to 1.2, preferably from 1.0 to 1.1.

12. A composition according to any of claims 1 to 11, wherein the composition is in the form of a bouillon cube.

13. A method for preparation of a composition according to any one of claims 1 to 12, comprising the steps:
a) mixing mono- and disaccharides, optionally vegetable oil, optionally at least a part of beef flavour, chicken flavour, meat flavour, and/or vegetable flavour, and optionally at least a part of herbs, spices, vegetables, and mixtures thereof;
b) adding native ungelatinised starch and dry glucose syrup, maltodextrin and combinations thereof to the mixture from step a), optionally at least a part of beef flavour, chicken flavour, meat flavour, and/or vegetable flavour, and optionally at least a part of herbs, spices, vegetables, and mixtures thereof; and mixing this combination of compounds;
c) adding fat, optionally at least a part of beef flavour, chicken flavour, meat flavour, and/or vegetable flavour, and optionally at least a part of herbs, spices, vegetables, and mixtures thereof, and optionally at least a part of herbs, spices, vegetables, and mixtures to the mixture from step b), and mixing this combination of compounds;
d) dosing the mixture from step c) into a packaging material.

14. A method according to claim 13, wherein in addition to the compounds in steps a) to c) no sodium chloride is added to prepare the composition.

15. A method for preparation of a composition according to any one of claims 1 to 12, comprising the steps:
a) mixing mono- and disaccharides, optionally vegetable oil, optionally at least a part of beef flavour, chicken flavour, meat flavour, and/or vegetable flavour, optionally at least a part of herbs, spices, vegetables, and mixtures thereof, native ungelatinised starch and dry glucose syrup, maltodextrin and combinations thereof, and mixing this combination of compounds;
b) adding fat, optionally at least a part of beef flavour, chicken flavour, meat flavour, and/or vegetable flavour, and optionally at least a part of herbs, spices, vegetables, and mixtures to the mixture from step a), and mixing this combination of compounds;
c) dosing the mixture from step b) into a packaging material.

## Patentansprüche

1. Zusammensetzung zur Herstellung von Bouillons, umfassend:
a) 0 bis 10 Gewichts-% Pflanzenöl;
b) 0 bis 25 Gewichts-% Mono- und Disaccharide;
c) 0,05 bis 12 Gewichts-% Rindfleischaroma, Hühneraroma, Fleischaroma und/oder Gemüsearoma;
d) 10 bis 50 Gewichts-% native ungelatinierte Stärke;
e) 10 bis 50 Gewichts-% trockenen Glucosesirup, Maltodextrin und Kombinationen davon;
f) 10 bis 35 Gewichts-% Fett;
und wobei das Gewichtsverhältnis zwischen den Verbindungen unter Teil d) und unter Teil e) im Bereich von 0,8 bis 1,3 liegt und wobei der Natriumgehalt maximal 0,5 Gewichts-% beträgt.

2. Zusammensetzung nach Anspruch 1, die nach Verdünnen mit heißem Wasser, vorzugsweise nach 20-fachem Verdünnen mit heißem Wasser, eine klare Bouillon ergibt, vorzugsweise eine klare Hühner-, Rinder- oder Gemüse-Bouillon.

3. Zusammensetzung nach Anspruch 1 oder 2, ferner umfassend 0,5 bis 30 Gewichts-% Kräuter, Gewürze, Gemüse und Mischungen davon.

4. Zusammensetzung nach einem der Ansprüche 1 bis 3, wobei der Gehalt an freiem Wasser maximal 2 Gewichts-%, vorzugsweise maximal 1 Gewichts-%, beträgt, wobei es besonders bevorzugt ist, wenn kein freies Wasser vorhanden ist.

5. Zusammensetzung nach einem der Ansprüche 1 bis 4, wobei der Gehalt an trockenem Glucosesirup, Maltodextrin und Kombinationen davon in dem Bereich von 15 bis 40 Gewichts-%, vorzugsweise von 18 bis 30 Gewichts-% liegt.

6. Zusammensetzung nach einem der Ansprüche 1 bis 5, wobei der Natriumgehalt maximal 0,4 Gewichts-%, vorzugsweise maximal 0,4 Gewichts-%, vorzugsweise maximal 0,3 Gewichts-%, vorzugsweise maximal 0,2 Gewichts-%, vorzugsweise maximal 0,1 Gewichts-%, vorzugsweise maximal 0,05 Gewichts-% und höchst bevorzugt maximal 0,025 Gewichts-% beträgt.

7. Zusammensetzung nach einem der Ansprüche 1 bis 6, wobei der Gehalt an Mononatriumglutamat maximal 1%, vorzugsweise maximal 0,5% beträgt, wobei es besonders bevorzugt ist, wenn kein Mononatriumglutamat vorhanden ist.

8. Zusammensetzung nach einem der Ansprüche 1 bis 7, wobei der Glucosesirup einen DE-Wert in dem Bereich von 26 bis 30 und/oder wobei das Maltodextrin einen DE-Wert in dem Bereich von 3 bis 20, vorzugsweise von 8 bis 18, aufweist.

9. Zusammensetzung nach einem der Ansprüche 1 bis 8, umfassend:
e) 10 bis 50 Gewichts-% Maltodextrin;
f) 10 bis 35 Gewichts-% Palmöl oder Palmölstearin oder vollständig hydriertes Palmöl oder Kombinationen davon.

10. Zusammensetzung nach einem der Ansprüche 1 bis 8, umfassend:
e) 10 bis 50 Gewichts-% trockenen Glucosesirup;
f) 10 bis 35 Gewichts-% Sheabutter oder Sheabutterstearin oder Kombinationen davon.

11. Zusammensetzung nach einem der Ansprüche 1 bis 10, wobei das Gewichtsverhältnis der Verbindungen unter Teil d) und unter Teil e) in dem Bereich von 0,9 bis 1,2, vorzugsweise von 1,0 bis 1,1, liegt.

12. Zusammensetzung nach einem der Ansprüche 1 bis 11, wobei die Zusammensetzung in Form eines Brühwürfels vorliegt.

13. Verfahren zur Herstellung einer Zusammensetzung nach irgendeinem der Ansprüche 1 bis 12, umfassend die Schritte:
a) Mischen von Mono- und Disacchariden, optional Pflanzenöl, optional mindestens einem Teil Rindfleischaroma, Hühneraroma, Fleischaroma und/oder Gemüsearoma und optional mindestens einem Teil Kräutern, Gewürzen, Gemüse und Mischungen davon;
b) Hinzufügen von nativer ungelatinierter Stärke und trockenem Glucosesirup, Maltodextrin und Kombinationen davon zu der Mischung aus Schritt a), optional mindestens einem Teil Rindfleischaroma, Hühneraroma, Fleischaroma und/oder Gemüsearoma und optional mindestens einem Teil Kräutern, Gewürzen, Gemüse und Mischungen davon und Mischen dieser Kombination von Verbindungen;
c) Hinzufügen von Fett, optional mindestens einem Teil Rindfleischaroma, Hühneraroma, Fleischaroma und/oder Gemüsearoma und optional mindestens einem Teil Kräutern, Gewürzen, Gemüse und Mischungen davon und optional mindestens einem Teil Kräutern, Gewürzen, Gemüse und Mischungen davon zu der Mischung aus Schritt b) und Mischen dieser Kombination von Verbindungen;
d) Dosieren der Mischung aus Schritt c) in ein Verpackungsmaterial.

14. Verfahren nach Anspruch 13, wobei bei dem Hinzufügen der Verbindungen in den Schritten a) bis c) kein Natriumchlorid hinzugefügt wird, um die Zusammensetzung herzustellen.

15. Verfahren zur Herstellung einer Zusammensetzung nach einem der Ansprüche 1 bis 12, umfassend die Schritte;
a) Mischen von Mono- und Disacchariden, optional Pflanzenöl, optional mindestens einem Teil Rindfleischaroma, Hühneraroma, Fleischaroma und/oder Gemüsearoma, optional mindestens einem Teil Kräutern, Gewürzen, Gemüse und Mischungen davon, nativer ungelatinierter Stärke und trockenem Glucosesirup, Maltodextrin und Kombinationen davon und Mischen dieser Kombination von Verbindungen;
b) Hinzufügen von Fett, optional mindestens einem Teil Rindfleischaroma, Hühneraroma, Fleischaroma und/oder Gemüsearoma und optional mindestens einem Teil Kräutern, Gewürzen, Gemüse und Mischungen zu der Mischung aus Schritt a) und Mischen dieser Kombination von Verbindungen;
c) Dosieren der Mischung aus Schritt b) in ein Verpackungsmaterial.

## Revendications

1. Composition pour produire des bouillons, comprenant:
a) 0 % à 10 % en poids d'huile végétale;
b) 0 % à 25 % en poids de mono- et disaccharides;
c) 0,05 % à 12 % en poids d'arôme de boeuf, d'arôme de poulet, d'arôme de viande et/ou d'arôme de légumes;
d) 10 % à 50 % en poids d'amidon non gélatinisé natif;
e) 10 % à 50 % en poids de sirop de glucose sec, de maltodextrine et de combinaisons de ceux-ci;
f) 10 % à 35 % en poids de graisse;
et dans laquelle le rapport pondéral entre les composés du sous-d) et du sous-e) va de 0,8 à 1,3; et dans laquelle la teneur en sodium est au maximum de 0,5 % en poids.

2. Composition selon la revendication 1, qui fournit un bouillon clair après dilution avec de l'eau chaude, de préférence après dilution 20 fois avec de l'eau chaude, de préférence un bouillon clair de poulet, de boeuf ou de légumes.

3. Composition selon la revendication 1 ou 2, comprenant en outre 0,5 % à 30 % en poids d'herbes, d'épices, de légumes et de mélanges de ceux-ci.

4. Composition selon l'une quelconque des revendications 1 à 3, dans laquelle la teneur en eau libre est au maximum de 2 % en poids, de préférence au maximum de 1 %, de préférence encore dans laquelle l'eau libre est absente.

5. Composition selon l'une quelconque des revendications 1 à 4, dans laquelle la teneur en sirop de glucose sec, maltodextrine et combinaisons de ceux-ci va de 15 % à 40 % en poids, de préférence de 18 % à 30 % en poids.

6. Composition selon l'une quelconque des revendications 1 à 5, dans laquelle la teneur en sodium est au maximum de 0,4 % en poids, de préférence au maximum de 0,4 % en poids, de préférence au maximum de 0,3 % en poids, de préférence au maximum de 0,2 % en poids, de préférence au maximum de 0,1% en poids, de préférence au maximum de 0,05 % en poids, et de manière particulièrement préférable au maximum de 0,025 % en poids.

7. Composition selon l'une quelconque des revendications 1 à 6, dans laquelle la teneur en glutamate monosodique est au maximum de 1 %, de préférence au maximum de 0,5 %, de préférence encore dans laquelle le glutamate monosodique est absent.

8. Composition selon l'une quelconque des revendications 1 à 7, dans laquelle le sirop de glucose a une valeur DE allant de 26 à 30 et/ou dans laquelle la maltodextrine a une valeur DE allant de 3 à 20, de préférence de 8 à 18.

9. Composition selon l'une quelconque des revendications 1 à 8, comprenant:
e) 10 % à 50 % en poids de maltodextrine;
f) 10 % à 35 % en poids d'huile de palme ou de stéarine d'huile de palme ou d'huile de palme totalement hydrogénée, ou de combinaisons de celles-ci.

10. Composition selon l'une quelconque des revendications 1 à 8, comprenant:
e) 10 % à 50 % en poids de sirop de glucose sec;
f) 10 % à 35 % en poids de beurre de karité ou de stéarine de beurre de karité, ou de combinaisons de ceux-ci.

11. Composition selon l'une quelconque des revendications 1 à 10, dans laquelle le rapport pondéral entre les composés du sous-d) et du sous-e) va de 0,9 à 1,2, de préférence de 1,0 à 1,1.

12. Composition selon l'une quelconque des revendications 1 à 11, dans laquelle la composition est sous la forme d'un cube de bouillon.

13. Procédé pour la préparation d'une composition selon l'une quelconque des revendications 1 à 12, comprenant les étapes:
a) mélanger des mono- et disaccharides, éventuellement de l'huile végétale, éventuellement au moins une partie d'arôme de boeuf, d'arôme de poulet, d'arôme de viande et/ou d'arôme de légumes, et éventuellement au moins une partie d'herbes, d'épices, de légumes et de mélanges de ceux-ci;
b) ajouter de l'amidon non gélatinisé natif et du sirop de glucose sec, de la maltodextrine et des combinaisons de ceux-ci au mélange issu de l'étape a), éventuellement au moins une partie d'arôme de boeuf, d'arôme de poulet, d'arôme de viande et/ou d'arôme de légumes, et éventuellement au moins une partie d'herbes, d'épices, de légumes et de mélanges de ceux-ci; et mélanger cette combinaison de composés;
c) ajouter de la graisse, éventuellement au moins une partie d'arôme de boeuf, d'arôme de poulet, d'arôme de viande et/ou d'arôme de légumes, et éventuellement au moins une partie d'herbes, d'épices, de légumes et de mélanges de ceux-ci, et éventuellement au moins une partie d'herbes, d'épices, de légumes et de mélanges au mélange issu de l'étape b), et mélanger cette combinaison de composés;
d) introduire de manière dosée le mélange de l'étape c) dans un matériau d'emballage.

14. Procédé selon la revendication 13, dans lequel en plus des composés des étapes a) à c) du chlorure de sodium n'est pas ajouté pour préparer la composition.

15. Procédé pour la préparation d'une composition selon l'une quelconque des revendications 1 à 12, comprenant les étapes:
a) mélanger les mono- et disaccharides, éventuellement l'huile végétale, éventuellement au moins une partie d'arôme de boeuf, d'arôme de poulet, d'arôme de viande et/ou d'arôme de légumes, éventuellement au moins une partie d'herbes, d'épices, de légumes et de mélanges de ceux-ci, l'amidon non gélatinisé natif et le sirop de glucose sec, la maltodextrine et les combinaisons de ceux-ci et mélanger cette combinaison de composés;
b) ajouter la graisse, éventuellement au moins une partie d'arôme de boeuf, d'arôme de poulet, d'arôme de viande et/ou d'arôme de légumes, et éventuellement au moins une partie d'herbes, d'épices, de légumes, et de mélanges de ceux-ci au mélange issu de l'étape a), et mélanger cette combinaison de composés;
c) introduire de manière dosée le mélange de l'étape b) dans un matériau d'emballage.
